# EUROPEAN PATENT APPLICATION

(11) **EP 1 566 159 A2**
(43) Date of publication of application: **24.08.2005**
(21) Application number: 05250949.4
(22) Date of filing: 18.02.2005
(51) Int. Cl.: A61G 11/00, A61G 7/08

(54) **Fuel cell powered patient transport cart**

(30) Priority: 19.02.2004 US 782032
(71) Applicant: Datex-Ohmeda, Inc., Madison, WI 53718 (US)
(72) Inventor: Severns, Matthew L., Gaithersburg, MD 20878 (US)
(74) Representative: Hedley, Nicholas James Matthew

(57) **Abstract**

A transport cart (10) for attaching to a patient care apparatus (12), such as a patient bed or infant care apparatus and is used to move that patient care apparatus from one location to another. During that transport, the transport cart supplies electrical power to the patient care apparatus or peripheral equipment attending to the care and monitoring of the patient. There is, therefore, a source of power on the transport cart that moves with the transport cart and enables that transport cart to provide the electrical power. The electrical source on the transport cart is a fuel cell (34) provided with fuel from a reservoir (36) such that the cart can continue to supply the electrical power to the patient care apparatus for so long as there is a supply of fuel on the transport cart to operate the fuel cell. With the use of a fuel cell, there is no need for considerable periods of downtime that is currently necessary for recharging one or more batteries on the transport cart and thus the transport cart of this invention is more readily available to the hospital personnel. The cart may also carry gas cylinders (32) for supplying gas, e.g. oxygen, to the patient.

## Description

### Background

The present invention relates to a transport cart for transporting a patient care apparatus from one location to another while still maintaining support services to the patient supported by the patient care apparatus.

During the care of patients in a medical care institution, the patient is often maintained in a specialized environment while confined to a patient care apparatus, that is, for an adult patient, the patient is normally resting on a bed within the hospital, however, there are times where the patient must be moved from one location to another within that facility. The patient can be, at the time the move is necessitated, under the use of various patient care devices, that is, there may be certain monitors, perhaps a ventilator or other equipment that is currently in use to monitor the patient or to provide some service of care to that patient. The patient care devices require a source of electrical power for their operation.

Thus, in order to facilitate the move of the patient without discontinuing the use of such devices, a transport cart can be employed that includes batteries, such as rechargeable batteries, that can supply electrical power to the various patient care devices, including monitors or other devices providing a service to the patient. Accordingly, the transport cart can be affixed to the patient care apparatus and move along with that patient care apparatus so that such services to the patient can continue unabated during the move itself since the battery can supply sufficient power to allow the continued operation of the various patient care devices.

One particularly advantageous use of the transport cart is with an infant care apparatus such as an infant incubator. An example of an infant incubator is shown and described in U.S. Patent 4,936,824 of Koch *et al* or a combination apparatus that combines the function of the infant incubator along with the function of an infant warmer and one such apparatus is shown and described in U.S. Patent 6,213,935 and entitled "Infant Warming Apparatus" of Mackin *et al* and both of which patents are assigned to the assignee of the present application. Such infant care apparatus, obviously, require a source of electrical power to operate in providing the desired protective environment for the infant.

In any case, the use of a transport cart greatly facilitates the movement of the infant within the hospital environment from one location to another and the transport cart contains batteries that are connectible to the infant care apparatus so that the infant care apparatus receives its power from the transport cart and therefore can continue to function to provide all of the protection and life supporting services to that infant during the actual transit of the infant. As such, the infant need not be taken from its incubator or combination apparatus in order to be moved to another location but can remain safely within the protective environment, thus assuring continued care to the infant and a minimum of disruption to the infant.

One of the difficulties, however, with the use of rechargeable batteries used in a transport cart is that the batteries need a constant recharging and it can take a considerable period of time to recharge the battery before the transport cart can be used again, and, therefore, there is considerable down time where the conventional battery is too depleted to supply the necessary electrical power for an infant care apparatus and therefore the transport cart itself is unusable for considerable periods of time.

Generally, when the conventional transport cart is not in use, it is plugged into a wall outlet within the hospital facility to recharge the storage battery. When the transport cart is needed for use, the cart is unplugged from the wall and the infant care apparatus is electrically connected to the transport cart. The battery of the transport cart can thereafter supply the power to the infant care apparatus for as long as the rechargeable storage battery lasts.

It would be therefore advantageous to have a source of electrical power incorporated into a transport cart that overcomes the disadvantages and deficiencies of the current transport carts utilizing rechargeable batteries so as to supply a source of electrical power to the particular patient care apparatus with less out of service time and thus more availability to the hospital.

### Summary of the Invention

The present invention relates to a transport cart for use in transporting a patient care apparatus while providing electrical power to that patient care apparatus. The invention is applicable to any patient care apparatus where a patient is being maintained in a medical environment, such as a patient bed for adults and the like, but will be more specifically described herein as usable with an infant care apparatus where an infant is being maintained in a protective environment such as an infant incubator or an infant apparatus that combines the functions of an incubator and an infant warmer.

Therefore, in accordance with the present invention, there is a transport cart supported on wheels and which is attachable to a wheeled infant care apparatus so that the transport cart can thereby move along with the infant care apparatus through such interconnection. The infant care apparatus itself requires a source of electrical power and, in its normal operation, is supplied with that power through the hospital electrical service and the power may also be used for peripheral equipment used with the infant care apparatus such as a ventilator, separate monitors and the like.

The present transport cart has a source of electricity that is used to power the infant care apparatus after it has been disconnected from the hospital electrical service in order to transport that infant care apparatus from one location to another while containing the infant and while continuing to supply the necessary support services and monitoring facilities to the infant contained therein. Thus, when the transportation takes place, the electrical source on the transport cart is connected to the infant care apparatus as well as to other peripheral equipment that may be providing support to the infant during that transit.

The source of electrical power on the transport cart of the present invention is a fuel cell. A fuel cell is a device that extracts energy from input chemicals and directly produces electricity. A such, the fuel cell will continue to supply the electrical power for so long as there is fuel remaining and there is no need to recharge the power source but merely replace the fuel when it has been depleted.

There are a number of differing fuel cells that are commercially available. The most common type of fuel cell is the hydrogen-oxygen (H-O) cell and which directly combines hydrogen gas and oxygen gas in solution at an electrode to produce the electricity. There are many companies that manufacture commercial fuel cells of the hydrogen-oxygen type. An advanced type of H-O fuel cell uses a "reformer" to allow organic compounds such as methanol to provide the hydrogen necessary to the operation of the fuel cell.

An alternative type of fuel cell that is usable with the present invention is the zinc-air fuel cell, currently commercially available from Metallic Power, Inc. That cell uses zinc pellets and potassium hydroxide to create electrical power. Technology relating to the fuel cell is shown and described in U.S. Patent 3,887,400 entitled Method and Apparatus For Electrochemically Producing an Electric Current" and the disclosure of that patent is hereby incorporated herein in its entirety by reference.

With the present invention of a fuel cell used with a transport cart in a medical environment, there is the advantage over the aforementioned conventional transport carts in that there is no need for a prolonged recharge time for the battery on the transport cart before the transport cart can be used again, that is, the time that the power can be provided to the particular infant care apparatus is dependent only on the availability of a fuel i.e. hydrogen gas, organic compounds, zinc pellets and the like.

As such, the present transport cart does not need to be plugged into a wall outlet for recharging and the fuel cell power system will provide power to the infant care apparatus as long as there is fuel in the system and, when that fuel is depleted, it is a relatively simple matter to replace the fuel reservoir and the transport cart is again back in service. Thus, there is little down time for the transport cart of the present invention and is a considerable advantage in a hospital environment where the transport cart can be available for more time than with the conventional transport cart that needs the downtime for recharging the battery and is, therefore, unavailable for use to the hospital personnel during that recharging time.

These and other features and advantages of the present invention will become more readily apparent during the following detailed description taken in conjunction with the drawings herein.

### Brief Description of the Drawings

FIG. 1 is a perspective view of a hospital transport cart in position to be affixed to an infant care apparatus;
FIG 2 is a perspective view of the hospital transport cart affixed to an infant care apparatus;
FIG. 3 is a block diagram of a typical conventional power system for a hospital cart utilizing a rechargeable battery; and
FIG. 4 is a block diagram of a hospital cart having a fuel cell constructed in accordance with the present invention and illustrating the power system of the present invention.

### Detailed Description of the Invention

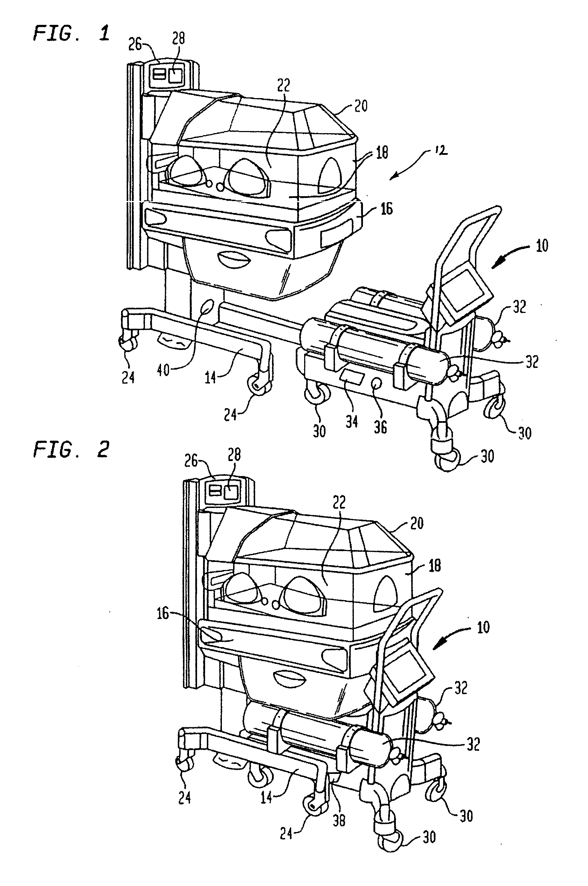

Referring now to Figs. 1, there is shown a perspective view of a transport cart 10 constructed in accordance with the present invention. It should be noted that the present invention is described specifically with respect to an infant care apparatus, however, the present invention is equally applicable to other patient care apparatus that support a patient while that patient is undergoing treatment and where a source of electrical power is required to power various devices that provide care and/or monitor the status of the patient, including adult beds or other such apparatus. Those devices requiring electrical power may be incorporated into the patient care apparatus or may be simply mounted to the patient care apparatus and therefore move with the patient care apparatus when the patient care apparatus is moved from one location to another location carrying the patient.

Accordingly, as can be seen, there is also an infant care apparatus, specifically an incubator 12 that can be constructed in accordance with the aforementioned U.S. Patent 6,213,935 of Mackin *et al* and which basically comprises a base 14 that supports an infant platform 16 for supporting the infant. A plurality of transparent walls 18 surround the infant when positioned on the infant platform 16 and a vertically movable canopy 20 is positioned over the upper peripheral edge of the transparent walls 18 to form an infant compartment 22 therein for providing the controlled atmosphere for the infant including control of the temperature and humidity within the infant compartment 22.

The infant incubator 12 has a plurality of wheels 24 to enable the incubator 12 to be readily wheeled from one location to another within the hospital environment. The incubator 12 has a control panel 26 that provides an easy and convenient location for the user to operate the incubator 12. The control panel 26 may also include one or more monitors 28 to monitor functions of the incubator 12 or the infant being treated in that incubator 12. The control function of the incubator 12 as well as the monitors 28 are operated by means of electrical power and thus, under normal conditions, the incubator 12 is connected to the normal supply of electrical power that is available in the hospital room or nursery.

The transport cart 10 also has a plurality of wheels 30 to enable the transport cart 10 to be readily movable along the floor of the particular hospital facility along with the incubator 12. The transport cart 10 is adapted to be affixed to the incubator 12 so that the transport cart 10 can be used to move the incubator 12 from one location to another within the hospital environment. During that transit, the transport cart 10 provides the electrical power along with other utilities to the incubator. As an example, there can be oxygen or other gas cylinders 32 carried by the transport cart 10 for use by the infant during the transit thereof since the incubator 12 is otherwise cut off from its normal supply of oxygen from the hospital central supply.

The transport cart 10 also includes, therefore, a source of electrical power and the source is a fuel cell 34 that is carried by the transport cart 10 and which has, therefore, a fuel reservoir 36 to contain the fuel that is used to create the electrical power by means supplying that fuel to the fuel cell 34.

Turning now to Fig. 2, there is shown the transport cart 10 that is affixed to the incubator 12 so that the transport cart 10 can be propelled to move the incubator 12 along therewith and there may be an affixation means such as latches 38 to affix the transport cart 10 to the incubator 12 so that the two apparatus can travel together in order to move the incubator 12 containing the infant being treated from one location to another while still supplying the necessary service to maintain the infant under the desired conditions and the status ascertained by the monitor 28.

There is an electrical connection between the transport cart 10 and the incubator 12 so that the source of electricity generated by the transport cart 10 can be electrically connected to power the incubator 12 and the monitors 28 during the time that the incubator 12 and the transport cart 10 are being moved within the hospital. That connection can be by some interconnection such as a connector 40 (Fig. 1) on the frame of the incubator 12 that mates with a connector (not shown) on the transport cart 10 or there may be hard wires that allow the incubator 12 to be plugged into a suitable receptacle located on the transport cart 10.

In any event, the actual electrical connection between the transport cart 10 and the infant incubator 12 can be conventional, it being only of importance that during the transit of the infant incubator 12, the source of power normally supplied by the hospital electrical system is disconnected and the source of electrical power thereafter used by the incubator 12 is provided by the transport cart 12 and, specifically by the means of the fuel cell 34 that is a component of the transport cart 10.

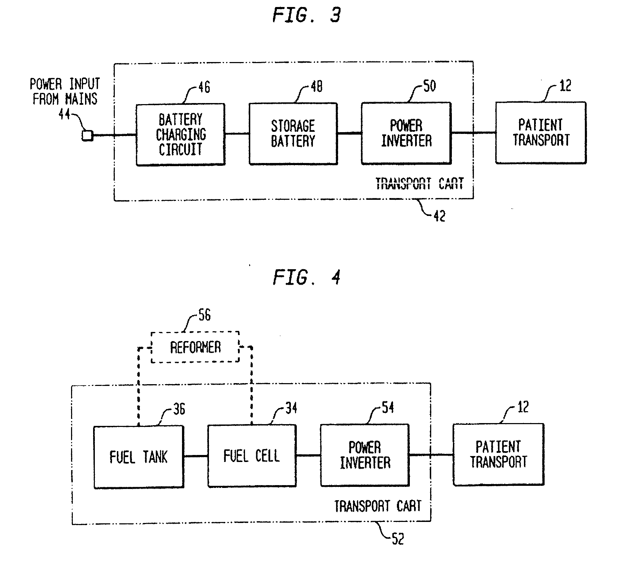

Turning now to Fig. 3, there is a block diagram of a conventional transport cart system that provides power to a patient care apparatus through the use of a conventional rechargeable battery. As seen in Fig. 3, the overall conventional power system 42 is adapted to be connected to a power input 44 supplied by the main electrical power of the hospital facility. The conventional power system 42 includes a battery charging circuit 46, a rechargeable storage battery 48 and a power inverter 50. The conventional power system 42 is shown connected to the patient transport, i.e. infant incubator 12 for illustration purposes since when the storage battery 48 is being charged by means of the battery charging circuit, the transport cart is not connected to the infant incubator 12 as has been explained, but is out of service during the entire charging cycle.

Turning next to Fig. 4, there is a block diagram of a power system 52 that is used with the present invention. With the power system 52, there is a fuel tank or reservoir 36 and which contains the quantity of fuel that is supplied to the fuel cell 34 for producing electrical energy. Again, there is a power inverter 54 and thereafter the electrical power is supplied to the infant incubator 12.

In Fig. 4, there also an optional step illustrated, that is, there is a reformer 56 that can be used in the process and is shown intermediate the fuel tank 36 and the fuel cell 34. The use of a reformer 56 is useful in order to produce the secondary fuel that is actually used in the fuel cell 34. With the use of reformer 56, the fuel tank 36 can contain a primary fuel, such as methanol and which is therefore stored in the form of a liquid and converted by the reformer 56 into hydrogen gas, thus the hydrogen gas is used in the fuel cell 34 and it is not necessary to store the flammable hydrogen gas directly but store liquid methanol instead.

As previously indicated, fuel cells are commercially available from a number of well known sources and can be of the hydrogen-oxygen (H-O) type of fuel cell or any of the other types of commercially available fuel cells that can be readily available. The significance is in the use of the fuel cell to power the patient care apparatus, including peripheral equipment such as monitors, that move with the patient care apparatus as it is transported from one location to another by means of the transport cart 10 (Figs. 1 and 2). Thus, there is no need for the extended down times that are currently needed to recharge storage batteries and take the transport cart out of service. Instead, the transport cart of the present invention will continue to supply electrical power to the patient care apparatus for so long as there is fuel available in the fuel reservoir and, at that time, the reservoir is simply replaced and the transport cart is immediately back in service.

Those skilled in the art will readily recognize numerous adaptations and modifications which can be made to the transport cart of the present invention which will result in an improved source of electrical power to a patient care apparatus, particularly an infant care apparatus, yet all of which will fall within the scope and spirit of the present invention as defined in the following claims. Accordingly, the invention is to be limited only by the following claims and their equivalents.

## Claims

1. A transport cart for transporting a patient care apparatus adapted to support a patient, said transport cart adapted to be attached to the patient care apparatus and be movable therewith, said transport cart having a source of electrical power that is adapted to be electrically connected to the patient care apparatus to supply electrical power to the patient care apparatus, said source of electrical power comprising a fuel cell, e.g. a hydrogen-oxygen fuel cell.

2. The transport cart as defined in claim 1 wherein said transport cart is adapted to be attached to an infant care apparatus, said cart optionally having wheels to enable it to be readily moved along with an infant care apparatus.

3. The transport cart as defined in any preceding claim wherein said transport cart includes a fuel reservoir to contain fuel for use in the fuel cell, said fuel reservoir optionally being readily replaceable.

4. The transport cart as defined in any preceding claim wherein said transport cart includes a fuel reservoir to contain a primary fuel and a reformer that converts the primary fuel into a secondary fuel that is used in the fuel cell, for example said fuel reservoir contains methanol in liquid form and said reformer converts the liquid methanol into hydrogen gas for use in the fuel cell.

5. The transport cart as defined in any preceding claim wherein the fuel cell utilizes zinc pellets to create electrical power.

6. A method of providing electrical power to a patient care apparatus during transportation of the patient care apparatus, said method comprising the steps of:
providing a transport cart having wheels and having a power source comprising a fuel cell for producing electrical power from a source of fuel, e.g. zinc;
attaching the transport cart to the patient care apparatus during the transportation of the patient care apparatus from one location to another location within a hospital environment;
connecting the power source of the transport cart to the patient care apparatus; and
utilizing the fuel cell to produce electrical power to power the patient care apparatus, including peripheral equipment that may be mounted on the patient care apparatus during the transportation of the patient care apparatus from the one location to another location.

7. The method as defined in claim 6 wherein the step of providing a transport cart comprises providing a transport cart having hydrogen-oxygen fuel cell.

8. The method as defined in claim 6 or 7, wherein the step of attaching the transport cart to the patient care apparatus comprises attaching the transport cart to an infant care apparatus, e.g. an infant care apparatus having at least one patient monitor.

9. The method as defined in any of claims 6 to 8 wherein the step of providing a transport cart comprises providing a transport cart having a fuel reservoir to supply fuel to the fuel cell.

10. The method as defined in any of claims 6 to 9wherein the step of providing a transport cart comprises providing a transport cart having a fuel reservoir for containing a primary fuel in liquid form, e.g. methanol, and a reformer for converting the liquid fuel into a secondary gaseous fuel, e.g. hydrogen, for use in the fuel cell.
